# EUROPEAN PATENT SPECIFICATION

(11) **EP 3 559 503 B1**
(45) Date of publication and mention of the grant of the patent: **21.07.2021**
(21) Application number: 17835803.2
(22) Date of filing: 21.12.2017
(51) Int. Cl.: F16G 5/16

(54) **DRIVE BELT COMPRISING DIFFERENT TYPES OF TRANSVERSE SEGMENTS FOR A CONTINUOUSLY VARIABLE TRANSMISSION**
ANTRIEBSRIEMEN MIT UNTERSCHIEDLICHEN TYPEN VON QUERSEGMENTEN FÜR EIN STUFENLOSES GETRIEBE
COURROIE DE TRANSMISSION COMPRENANT DIFFÉRENTS TYPES DE SEGMENTS TRANSVERSAUX POUR UNE TRANSMISSION À VARIATION CONTINUE

(30) Priority: 22.12.2016 NL 1042191
(43) Date of publication of application: 30.10.2019
(73) Proprietor: Robert Bosch GmbH, 70442 Stuttgart (DE)
(72) Inventor: VAN DER SLUIS, Francis Maria Antonius, 5271 HP Sint-Michielsgestel (NL); YILDIZ, Semih, 5000 AM Tilburg (NL)
(74) Representative: Plevier, Gabriël Anton Johan Maria
(86) International application number: PCT/EP2017/025370
(87) International publication number: WO 2018/114054

(56) References cited:
- WO-A1-2013/098653
- WO-A1-2014/090882
- JP-A- H03 209 036
- JP-A- 2002 054 691

## Description

The present invention relates to a drive belt for a continuously variable transmission, which is in particular destined to be arranged around two pulleys of the transmission and which comprises a plurality of discrete transverse elements or segments for contacting the transmission pulleys, as well as one or more endless carriers for carrying the transverse segments for supporting and guiding the transverse segments in between the pulleys. The present type of drive belt is also known as a push belt.

The endless carrier of the drive belt is typically composed of a plurality of mutually nested, continuous flexible metal bands and is also known as a ring set. The endless carrier is at least partly inserted in a recess provided in the transverse segments. In case the drive belt comprises only one endless carrier, such carrier is typically mounted in a central recess of the transverse segments that opens towards the radial outside of the drive belt. However, usually the drive belt is provided with at least two endless carriers that are each mounted in a respective one of two recesses of the transverse segments, which recesses then open towards a respective axial or lateral side of the transverse segments, i.e. of the drive belt.

The transverse segments of the drive belt are typically also made of metal and are slidingly arranged along the circumference of the endless carrier or carriers in a virtually continuous row, such that these segments are able to transmit forces which are related to a movement of the drive belt. The transverse segments have two main body surfaces that, at least partly, extend substantially parallel with respect to each other and that are separated from each other over the (local) thickness of the transverse segment by a circumference surface thereof. The transverse segments are relatively thin, such that a several hundred thereof are present in the drive belt. Each transverse segment is provided with a convexly curved surface section, denoted rocking edge, radially inward whereof the transverse segments are tapered, thus allowing adjacent segments to mutually rotate about the axial direction and follow a curved trajectory, while remaining in pushing contact with each other at the rocking edge. Parts of the circumference surface of a transverse segment are intended for frictionally contacting the transmission pulleys, in particular by being clamped between two conical sheaves of such pulleys, which parts are denoted contact surfaces hereinafter. Typically, the contact surfaces are profiled, i.e. contain pockets and/or channels, for taking-up lubricant in lower lying parts thereof, at the location whereof the contact surfaces do not arrive in direct, i.e. physical contact with the pulley sheaves. In the height direction of the transverse segments corresponding to the radial direction of the pulleys and the drive belt, the contact surfaces are mutually oriented at an angle corresponding to an angle defined between the sheaves of the pulleys. The friction contact between the contact surfaces and the pulley sheaves allows a force to be transmitted there between, such that the drive belt can transfer a drive torque and rotational movement from one transmission pulley to the other.

The dimension of the contact surfaces in the radial direction, i.e. the height thereof, directly influences the size and weight of the transverse segment and thus of the drive belt as a whole. To minimize such weight and thus also the usage of raw material, this height is preferably chosen as small as possible. However, some requirements in relation to a minimum height of the contact surfaces do exist, which requirements prevent a (further) weight reduction of the transverse segments, at least in as far as this weight is determined by the height of the contact surfaces thereof. For example, according to WO 2012/098426 A1, a preferred radial alignment of the transverse segments relative to the pulley sheaves is increasingly supported by an increasing height of the contact surfaces by resisting a (pitching) rotation of the transverse segments around an axis extending in axial direction of the drive belt. Another requirement in relation to the minimum height of the contact surfaces is taught by EP-A-0 367 620. This latter document prescribes a defined, geometrically determined minimum height of the contact surfaces to likewise support the said preferred radial alignment by preventing a (rolling) rotation of the transverse segments around an axis extending in the circumferential direction of the drive belt and relative to the pulley sheaves. Thus, by these known requirements in relation to the minimum height of the contact surfaces, a line contact between these surfaces and the pulley sheaves is favorably promoted.

Finally, JP2002054691A discloses yet another drive belt of the given type, according to the preamble of claim 1.

It is an object underlying the present disclosure to optimize the design of the drive belt, in particular in terms of its weight, while essentially maintaining or improving upon the customary operating performance thereof, in particular in terms of the preferred line contact between the contact surfaces of the transverse segments thereof and the pulley sheaves of the pulleys of the transmission wherein the drive belt is applied.

According to the present disclosure, two types of transverse segments are incorporated in the drive belt that are mutually distinguished by, at least, the height of the respective contact surfaces thereof. Such novel drive belt design is based on the technical insight that not every transverse segment in the drive belt needs to satisfy the above-described, known requirements in relation to the minimum height of the contact surfaces thereof, while still realizing the effect intended thereby for all transverse segments, i.e. while still promoting the line contact the contact surfaces thereof with the pulley sheaves. In fact, if only a part of the transverse segments of the drive belt, i.e. those of a first type, are provided with contact surfaces of the required height, these transverse segments resist not only their own rotation relative to the pulley sheaves, but also that of adjoining transverse segment regardless of the height of the contact surface thereof. These adjoining transverse segments can lean against the said transverse segments of the said first type and are thereby prevented from pitching relative thereto. Additionally, these adjoining transverse segments are prevented from rolling by and relative to the endless carrier of the drive belt that, in turn, is positioned by the transverse segments of the said first type.

In accordance with the present disclosure, these adjoining transverse segments may thus be of a second type having contact surfaces of lesser height than that of the first type. Although these transverse segments of the second type are then by themselves more prone to rolling rotation and/or pitching rotation than the said transverse segments of the first type, the preferred radial alignment of the contact surfaces thereof is sufficiently ensured by the neighboring transverse segments of the first type and/or the endless carrier that interact therewith during operation of the drive belt.

The present disclosure opens up the possibility to reduce the weight of the transverse segments of the second type, by reducing the size of, in particular, a bottom part thereof, located in between the contact surfaces thereof and radially inward of the endless carrier. In fact, also the size of a top part of these transverse segments of the second type, located radially outward of the endless carriers, can normally be reduced, since it is customary in the art to define the size of such top part in relation to the size of the said bottom part, in particular such that the center of gravity of the transverse segment is located according to an existing design preference. Preferably, the center of gravity of the transverse segment of the second type is located at essentially the same radial position as the center of gravity of the transverse segment of the first type. Preferably, a width of the transverse segments of the both types is at least virtually the same. By such feature, the clamping force exerted by and between the pulley sheaves is carried by the individual transverse segments in favorably similar shares.

The said first and second type of transverse segments may be provided in the drive belt in a mutually alternating pattern, in particular such that every transverse segment of the second type is placed in between two transverse segments of the first type in the said row of transverse segments of the drive belt. During operation of the drive belt, the transverse segments of the second type are then kept largely in the preferred radial orientation thereof relative of the pulley sheaves by the contact and interaction with not only the pulley sheaves, but also the endless carrier and the neighboring transverse segments of the first type.

Within the context of present disclosure it is, in principle, also possible to include more transverse segments of the second type in the drive belt than the number of transverse segments of the first type included therein. However, it can be preferable that each transverse segment of the second type adjoins a transverse segment of the first type on at least one side. Within this latter constraint, a 2-to-1 ratio between the number of transverse segments of the second type and of the first type in the drive belt realizes the smallest overall weight thereof.

The invention which is defined in the appended claims will be explained in more detail on the basis of the following description of the invention with reference to the drawing and in relation to a preferred embodiment thereof. In the drawing figures equal reference signs indicate equal or similar structures and/or parts.
Figure 1 provides a schematic perspective view of a continuously variable transmission with a drive belt running over two pulleys.
Figure 2 is a schematic illustration of a part of the known drive belt, which includes two sets of a number of flexible rings, as well as a plurality of transverse segments.
Figure 3 provides a schematic front-view of a transverse segment of the known drive belt.
Figure 4 provides a schematic side elevation of a first embodiment of the drive belt according to the present disclosure.
Figure 5 provides a schematic front-view of a transverse segment modified in accordance with the present disclosure when departing from the known transverse segment of figure 3.
Figure 6 provides a schematic side elevation of a second embodiment of the drive belt according to the present disclosure.
Figure 7 provides a schematic front-view of a transverse segment incorporating a further modification in accordance with the present invention when departing from the known transverse segment of figure 3.

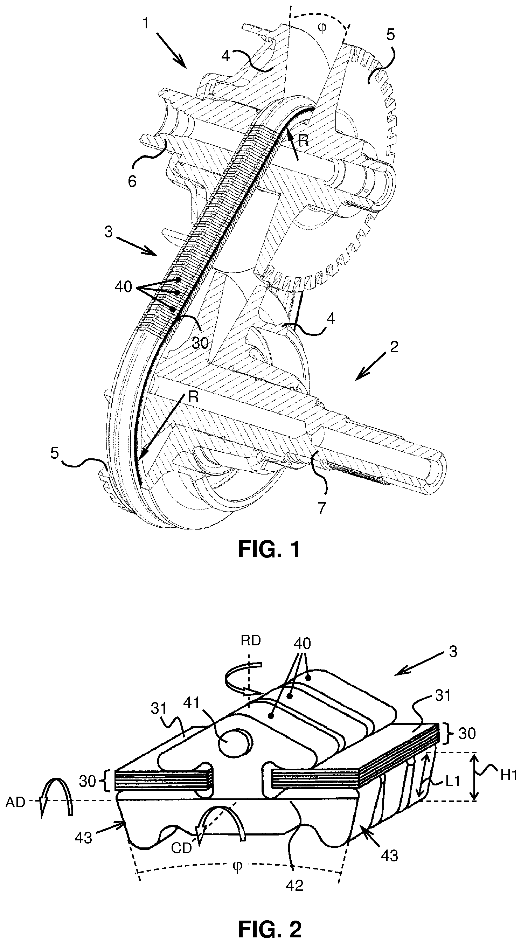

The schematic illustration of a continuously variable transmission (CVT) in Figure 1 shows a drive belt 3 which is wrapped around two pulleys 1 and 2 and which includes two separate endless carriers 30, as well as a plurality of transverse segments 40 that are mounted on and arranged along the circumference of these carriers 30 in an essentially contiguous row. When it is clamped between the two conical pulley discs 4, 5 of the pulleys 1, 2, the drive belt 3 is able to transmit a torque and an accompanying rotational movement between these pulleys 1, 2. At the same time, the running radii R of the drive belt 3 between the discs 4, 5 of the respective pulleys 1, 2 determine the transmission (speed) ratio of the CVT, i.e. the ratio between the rotational speeds of the respective pulleys 1, 2. This CVT, its principal operation and its uses are known per se.

An example of a known drive belt 3 is shown in more detail in figure 2 in a section of three transverse segments 40 thereof. In this figure 2 it is shown that the endless carriers 30 are each made up of a set of mutually nested, flat and flexible rings 31. The transverse segments 40 of the drive belt 3 are arranged in mutual succession, i.e. in a row along the circumference of the endless carriers 30 and such manner that they can slide relative to and in the circumferential direction of the carriers 30. To a certain extent, the transverse segments 40 are thus also able to rotate relative to the endless carriers 30 about the axial direction AD ("pitching"), about the radial direction RD ("yawing") and about the circumferential direction CD ("rolling") of the drive belt 3, as indicated in figure 2 by the curved arrows.

Each transverse segment 40 is provided with a projection 41, projecting from a main face thereof in a circumferential direction of a belt, and with a recess in its opposite main face (not shown). In the drive belt 3, the projection 41 of a transverse segment 40 is at least party inserted in the recess of a respectively adjoining transverse segment 40 for the mutual alignment thereof in a plane oriented perpendicular to the said circumferential direction.

A so-called rocking edge 42 of the transverse segment 40 defines a convexly curved transition surface between a radially outer, i.e. top part of the transverse segment 40 and a tapered radially inner, i.e. bottom part thereof. This rocking edge 42 of the transverse segments 40 extends widthwise, i.e. in the axial direction of the drive belt 3, and serves as a fulcrum for the mutual rotation, i.e. pitching, of two adjoining transverse segments 40 in the said row thereof, allowing the drive belt 3 to follow a curved trajectory between the pulley discs 4, 5 of the two pulleys 1, 2.

The transverse segments 40 take-up a clamping force exerted between the discs 4, 5 of each pulley 1, 2 via contact surfaces 43 provided on either axial side thereof. These contact surfaces 43 mutually diverge in radial outward direction at an angle ϕ that essentially matches an angle ϕ defined between the discs 4, 5 of either pulley 1, 2. Hereinafter, the term height "H1" of the contact surfaces 43 is used for the dimension thereof in radial direction, i.e. as measured perpendicular to the pulley shafts 6, 7. For example, if a length of the contact surfaces 43 amounts to "L1", then the said height H1 can be calculated with the equation: H1 = L1 • cos(½ϕ).

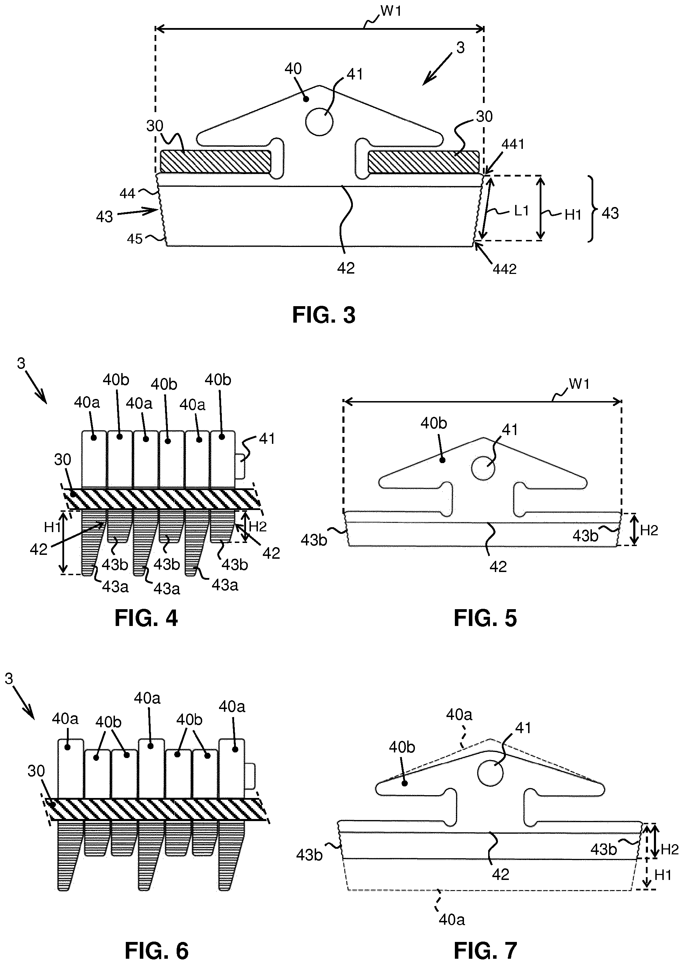

Although such feature is not illustrated in figure 2, the contact surfaces 43 of the transverse segments 40 are typically not shaped as flat and smooth surfaces, but instead are typically provided with a considerable roughness and/or with a surface profile such as a corrugation. This latter, corrugated design of the contact surfaces 43 is illustrated in figure 3 that depicts the known transverse segment 40 in a front view thereof, i.e. in a cross-section of the drive belt 3 facing in its circumferential direction. The higher-lying, i.e. relatively protruding parts 44 of the contact surfaces 43 are intended to arrive in direct contact with the pulley discs 4, 5, whereas the lower-lying, i.e. relatively recessed parts 45 thereof can take up and channel away lubrication/ cooling fluid that is expelled from in-between the said protruding parts 44 and the pulley discs 4, 5 during operation. In the shown example of the corrugated contact surfaces 43, the said length L1 and height H1 thereof are determined, at least effectively, by and between a radially outermost protruding part 441 and a radially innermost protruding part 442 thereof that arrive in contact with the pulley discs 4, 5 during operation.

In practice the transverse segments 40 of the drive belt 3 are typically almost identically shaped, showing only minimal differences such as a thickness of 1.5 mm and of 1.4 mm respectively. Most design aspects of the known transverse segment 40 have been carefully considered and optimized over the years. In particular, the transverse segments 40 are designed to reliably and for a prolonged time withstand the loading thereof during operation. Specifically in relation to the height H1 of the contact surfaces 43 of the transverse segment 40, a minimum height requirement is applicable, not only for providing sufficient strength (against buckling) and wear resistance, but also for promoting the preferred radial alignment of the transverse segment 40 relative to the pulley discs 4, 5. This minimum height requirement of the contact surfaces 43 to a large extent determines the size and weight of the transverse segment 40 and of the drive belt 3 as a whole. One example of such minimum height requirement is taught by EP-A-0 367 620, according to which document: L1 > W1 • sin(½ϕ), with W1 representing a pulley contact width of the transverse segments 40 that is defined by a distance in the axial direction between the radially outermost protruding parts 441 of the contact surfaces 43 of the transverse segment 40. This particular known minimum height requirement is broadly applied in practice. In terms of H1, this known requirement corresponds to H1 > W1 • ½sin(ϕ).

In the known drive belt 3 of figures 2 and 3, all of the transverse segments 40 thereof are provided with essentially the same height H1 of their contact surfaces 43 that satisfies such minimum height requirement. One known solution to reduce the weight of the transverse segment 40 for a given height H1 of its contact surfaces 43 is to punch one or more holes in its radially inner, i.e. bottom part. However, this may not always be possible or economic in the manufacture of the transverse segment 40. The present disclosure provides an alternative solution for reducing the weight of the drive belt 3 as a whole.

A first embodiment of the drive belt 3 according to the present disclosure is schematically illustrated in figure 4 in a side elevation of a section of six transverse segments 40a, 40b thereof. In this first embodiment thereof, the drive belt includes two types 40a, resp. 40b of transverse segments 40a, 40b, whereof a first type 40a is provided with contact surfaces 43a of greater height H1 than the height H2 of the contact surfaces 43b of a second type 40b. As a result, the weight of the lower transverse segment 40b, i.e. the transverse segment of the second type 40b is (or at least can be) less than the weight of the higher transverse segment 40a, i.e. the transverse segment of the first type 40a. Therefore, the weight of the novel drive belt 3 of figure 4 as whole can be favorably less than the weight of a drive belt 3 including only the higher transverse segments 40a.

In the novel drive belt 3 of figure 4, the position and orientation of the transverse segments of the second type 40b that do not satisfy the aforementioned minimum height requirement are determined, at least in part, by the higher neighboring transverse segments of the first type 40a, either directly by physical contact or indirectly via the endless carriers 30. In figure 5 an example of such transverse segment of the second type 40b is illustrated in a schematic front-view thereof, whereas transverse segment of the first type 40a in the embodiment of the drive belt of figure 4 is copied from the known drive belt 3 shown in figure 3. Since both these transverse segments types 40a, 40b are intended to (and do) arrive in friction contact with the pulleys 1, 2 during operation, the widths W1 of the transverse segment types 40a and 40b are essentially the same. At least, a difference in such width dimension is less than an elastic deformation in axial direction of the transverse segments 40a, 40b under load, i.e. during operation in the transmission, which deformation typically amounts to less than 100 micron. However, not all dimensions of the transverse segments 40a, 40b need to be the same between the two said types 40a, 40b thereof. For example, the lower transverse segment of the second type 40b can be thicker than the higher transverse segment of the first type 40a in order to increase the weight reduction of the novel drive belt 3 (not illustrated).

Possibly, in accordance with the present disclosure, the height H2 of the contact surfaces 43b of lesser height, i.e. of the transverse segments of the second type 40b, amounts to between one third (⅓) and two thirds ( 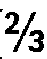 ) of the height H1 of the contact surfaces 43a of the transverse segments of the first type 40a. More in particular, the former height H2 amounts to approximately one half (½) of the latter height H1. These values are broadly applicable in practice by providing a considerable weight reduction of the drive belt 3 as a whole, while still providing both types of transverse segments 40a, 40b with the strength and wear resistance required for a reliable and lasting operation of the drive belt 3. Possibly also, the height H1 of the contact surfaces 43a of the transverse segments of the first type 40a satisfies the numeric required taught by EP-A-0 367 620: H1 > W1 • ½sin(ϕ), whereas the height H2 of the contact surfaces 43b of the transverse segments of the second type 40b does not, i.e. whereas: H2 < W1 • ½sin(ϕ).

A second embodiment of the drive belt 3 according to the present disclosure is schematically illustrated in figure 6 in a side elevation of a section of six transverse segments 40a, 40b thereof. This second embodiment differs in two aspects from the above, first embodiment of the drive belt 3, which aspects can, however, also be applied individually, i.e. independently of one another.

A first novel design aspect of the drive belt 3 of figure 6 is the order in which the two types of transverse segments 40a, 40b thereof are mutually arranged in the row of transverse segments 40a, 40b extending along the circumference of the endless carriers 30. In the said first embodiment of the drive belt 3 of figure 4, the two types of the transverse members 40a, 40b are arranged in a mutually alternating pattern. Instead, in this second embodiment of the drive belt 3 of figure 6, each transverse segment of the first type 40a with the higher (H1) contact surfaces 43a is both preceded and followed by a set of two transverse members of the second type 40b with the lower (H2) contact surfaces 43b. Thus, in this second embodiment of the drive belt 3, each transverse segment of the second type 40b adjoins a transverse segment of the first type 40a on only side thereof. In comparison with the said first embodiment of the drive belt 3 of figure 4, this second embodiment thereof of figure 6 provides a further weight reduction relative to the know drive belt design of figure 2.

A second novel design aspect of the drive belt 3 of figure 6 is that the height of the radial outer, top part of the transverse segments of the second type 40b is less than that of the transverse segments of the first type 40a. This design aspect of the novel drive belt 3 is also illustrated in figure 7 in a front view of the transverse segment of the second type 40b in relation to an outer contour of the transverse segment of the first type 40a (indicated by the dashed lines). In comparison with the embodiment of the transverse segment of the second type 40b drive belt 3 according to figures 4 and 5, the embodiment thereof according to figures 6 and 7 provides a further weight reduction relative to the know drive belt design of figure 2. Furthermore, by this second novel design aspect the center of gravity of the second type transverse segments 40b is located lower, as seen in the radial direction, in particular closer to the center of gravity of the first type transverse segments 40a.

The present disclosure, in addition to the entirety of the preceding description and all details of the accompanying figures, also concerns and includes all of the features in the appended set of claims. Bracketed references in the claims do not limit the scope thereof, but are merely provided as non-limiting example of a respective feature. Separately claimed features can be applied separately in a given product or a given process, as the case may be, but can also be applied simultaneously therein in any combination of two or more of such features.

The invention(s) represented by the present disclosure is (are) not limited to the embodiments and/or the examples that are explicitly mentioned herein, but also encompass(es) amendments, modifications and practical applications thereof, in particular those that lie within reach of the person skilled in the relevant art.

## Claims

1. A drive belt (3) for a continuously variable transmission with at least one annular carrier (30) and with a number of transverse segments (40; 40a, 40b) arranged slidably on the carrier (30) in a row along the circumference thereof, which transverse segments (40; 40a, 40b) are all provided with two main body surfaces, where between the transverse segment (40; 40a, 40b) extends in thickness direction, and with a circumference surface located between and connecting the main body surfaces, whereof parts, named contact surfaces (43; 43a, 43b), are mutually oriented at an acute angle (ϕ) and are destined to arrive in friction contact with pulleys (1, 2) of the transmission, and which transverse segments are all provided with a widthwise extending, convexly curved transition surface part of one of the main body surfaces thereof, named rocking edge (42), that is located between a top part of the transverse segment (40) and a tapered bottom part thereof and that serves as a fulcrum for the mutual rotation of adjoining transverse segments (40; 40a, 40b) in the said row of transverse segments (40; 40a, 40b) of the drive belt (3), wherein two types (40a, 40b) of the transverse segments (40; 40a, 40b) are included in the drive belt (3), **characterized in that** the contact surfaces (43; 43a, 43b) are provided with a height dimension (H1; H2) in the radial direction of the drive belt (3) that is different between the said two transverse segment types (40a, 40b), which height dimension (H1) of the contact surfaces (43a) of the transverse segments (40; 40a, 40b) of a first type (40a) is larger than a mathematical product of a largest width dimension (W1) between these contact surfaces (43a) and half the sine value of the angle (ϕ) between these contact surfaces (43a) and which height dimension (H2) of the contact surfaces (43b) of the transverse segments (40; 40a, 40b) of a second type (40b) is smaller than a mathematical product of a largest width dimension (W2) between these contact surfaces (43b) and half the sine value of the angle (ϕ) between these contact surfaces (43b).

2. The drive belt (3) according to the claim 1, **characterized in that**, a ratio between the height dimensions (H1, H2) of the contact surfaces (43; 43a, 43b) of the two types of (40a, 40b) of the transverse segments (40; 40a, 40b) has a value in the range between 1/3 and 2/3 and preferably is equal to 1/2.

3. The drive belt (3) according to the claim 1 or 2, **characterized in that**, the transverse segments (40; 40a, 40b) of the first type (40a) extend further in radial direction than the transverse segments (40; 40a, 40b) of the second type (40a), both further to the radial inside and further to the radial outside of carrier (30).

4. The drive belt (3) according to one of the claims 1, 2 or 3, **characterized in that**, a width dimension (W1) of the transverse segments (40; 40a, 40b) of the first type (40a) between the contact surfaces (43a) thereof is fractionally larger than a width dimension (W2) of the transverse segments (40; 40a, 40b) of the second type (40b) between the contact surfaces (43b) thereof.

5. The drive belt (3) according to one of the claims 1-4, **characterized in that**, the acute angle (ϕ) between the contact surfaces (43; 43a, 43b) of the transverse segments (40; 40a, 40b) of the first type (40a) is fractionally larger than such angle (ϕ) between the contact surfaces (43b) of the transverse segments (40; 40a, 40b) of the second type (40b).

6. The drive belt (3) according to one of the claims 1-5, **characterized in that**, the said two transverse segment types (40a, 40b) are mutually alternatingly arranged along the circumference of the carrier (30).

7. The drive belt (3) according to one of the claim 1-6, **characterized in that**, along the circumference of the carrier (30) pairs of consecutive transverse segments (40; 40a, 40b) of the second type (40b) are arranged alternatingly with a single transverse segments (40; 40a, 40b) of the first type (40a).

## Patentansprüche

1. Antriebsriemen (3) für ein stufenloses Getriebe mit mindestens einem ringförmigen Träger (30) und mit einer Anzahl von Quersegmenten (40; 40a, 40b), die auf dem Träger (30) in einer Reihe entlang des Umfangs davon verschiebbar angeordnet sind, wobei die Quersegmente (40; 40a, 40b) alle mit zwei Hauptkörperflächen bereitgestellt sind, zwischen denen sich das Quersegment (40; 40a, 40b) in Dickenrichtung erstreckt, und wobei eine Umfangsfläche zwischen den Hauptkörperflächen angeordnet ist und diese verbindet, wovon Teile, genannt Kontaktflächen (43; 43a, 43b), in einem spitzen Winkel (ϕ) zueinander ausgerichtet sind und dazu bestimmt sind, in Reibungskontakt mit Riemenscheiben (1, 2) des Getriebes zu gelangen, und wobei die Quersegmente alle mit einem sich in Breitenrichtung erstreckenden, konvex gekrümmten Übergangsflächenteil einer der Hauptkörperflächen davon bereitgestellt sind, genannt Kippkante (42), der zwischen einem oberen Teil des Quersegments (40) und einem sich verjüngenden unteren Teil davon angeordnet ist und der als ein Drehpunkt für die gemeinsame Drehung von angrenzenden Quersegmenten (40; 40a, 40b) in der Reihe von Quersegmenten (40; 40a, 40b) des Antriebsriemens (3) dient, wobei zwei Arten (40a, 40b) der Quersegmente (40; 40a, 40b) in dem Antriebsriemen (3) enthalten sind, **dadurch gekennzeichnet, dass**
die Kontaktflächen (43; 43a, 43b) mit einer Höhenabmessung (H1; H2) in der radialen Richtung des Antriebsriemens (3) bereitgestellt sind, die zwischen den zwei Quersegmentarten (40a, 40b) unterschiedlich ist, wobei die Höhenabmessung (H1) der Kontaktflächen (43a) der Quersegmente (40; 40a, 40b) einer ersten Art (40a) größer als ein mathematisches Produkt einer größten Breitenabmessung (W1) zwischen diesen Kontaktflächen (43a) und einer Hälfte des Sinuswerts des Winkels (ϕ) zwischen diesen Kontaktflächen (43a) ist und wobei die Höhenabmessung (H2) der Kontaktflächen (43b) der Quersegmente (40; 40a, 40b) einer zweiten Art (40b) kleiner als ein mathematisches Produkt einer größten Breitenabmessung (W2) zwischen diesen Kontaktflächen (43b) und einer Hälfte des Sinuswerts des Winkels (ϕ) zwischen diesen Kontaktflächen (43b) ist.

2. Antriebsriemen (3) nach Anspruch 1, **dadurch gekennzeichnet, dass** ein Verhältnis zwischen den Höhenabmessungen (H1, H2) der Kontaktflächen (43; 43a, 43b) der zwei Arten (40a, 40b) der Quersegmente (40; 40a, 40b) einen Wert im Bereich zwischen 1/3 und 2/3 aufweist und vorzugsweise gleich 1/2 ist.

3. Antriebsriemen (3) nach Anspruch 1 oder 2, **dadurch gekennzeichnet, dass** sich die Quersegmente (40; 40a, 40b) der ersten Art (40a) weiter in radialer Richtung erstrecken als die Quersegmente (40; 40a, 40b) der zweiten Art (40a), sowohl weiter zu der radialen Innenseite als auch weiter zu der radialen Außenseite des Trägers (30).

4. Antriebsriemen (3) nach einem der Ansprüche 1, 2 oder 3, **dadurch gekennzeichnet, dass** eine Breitenabmessung (W1) der Quersegmente (40; 40a, 40b) der ersten Art (40a) zwischen den Kontaktflächen (43a) davon geringfügig größer als eine Breitenabmessung (W2) der Quersegmente (40; 40a, 40b) der zweiten Art (40b) zwischen den Kontaktflächen (43b) davon ist.

5. Antriebsriemen (3) nach einem der Ansprüche 1-4, **dadurch gekennzeichnet, dass** der spitze Winkel (ϕ) zwischen den Kontaktflächen (43; 43a, 43b) der Quersegmente (40; 40a, 40b) der ersten Art (40a) geringfügig größer als ein solcher Winkel (ϕ) zwischen den Kontaktflächen (43b) der Quersegmente (40; 40a, 40b) der zweiten Art (40b) ist.

6. Antriebsriemen (3) nach einem der Ansprüche 1-5, **dadurch gekennzeichnet, dass** die zwei Quersegmentarten (40a, 40b) sich gegenseitig abwechselnd entlang des Umfangs des Trägers (30) angeordnet sind.

7. Antriebsriemen (3) nach einem der Ansprüche 1-6, **dadurch gekennzeichnet, dass** entlang des Umfangs des Trägers (30) Paare von aufeinanderfolgenden Quersegmenten (40; 40a, 40b) der zweiten Art (40b) abwechselnd mit einem einzelnen Quersegment (40; 40a, 40b) der ersten Art (40a) angeordnet sind.

## Revendications

1. Courroie d'entraînement (3) pour une transmission à variation continue avec au moins un support annulaire (30) et avec un nombre de segments transversaux (40 ; 40a, 40b) agencés de façon coulissante sur le support (30) en une rangée le long de la circonférence de celui-ci, lesquels segments transversaux (40 ; 40a, 40b) sont tous pourvus de deux surfaces de corps principales, entre lesquelles le segment transversal (40 ; 40a, 40b) s'étend dans la direction d'épaisseur, et d'une surface de circonférence située entre et raccordant les surfaces de corps principales, dont des parties, appelées surfaces de contact (43 ; 43a, 43b), sont mutuellement orientées à un angle aigu (ϕ) et sont destinées à arriver en contact à frottement avec des poulies (1, 2) de la transmission, et lesquels segments transversaux sont tous pourvus d'une partie de surface de transition, incurvée de façon convexe et s'étendant dans le sens de la largeur, d'une des surfaces de corps principales de ceux-ci, appelée bord oscillant (42), qui est située entre une partie supérieure du segment transversal (40) et une partie inférieure effilée de celui-ci et qui sert de point d'appui pour la rotation mutuelle de segments transversaux contigus (40 ; 40a, 40b) dans ladite rangée de segments transversaux (40 ; 40a, 40b) de la courroie d'entraînement (3), dans laquelle deux types (40a, 40b) des segments transversaux (40 ; 40a, 40b) sont inclus dans la courroie d'entraînement (3), **caractérisée en ce que**
les surfaces de contact (43 ; 43a, 43b) sont pourvues d'une dimension de hauteur (H1 ; H2) dans la direction radiale de la courroie d'entraînement (3) qui est différente entre lesdits deux types de segment transversal (40a, 40b), laquelle dimension de hauteur (H1) des surfaces de contact (43a) des segments transversaux (40 ; 40a, 40b) d'un premier type (40a) est plus grande qu'un produit mathématique d'une dimension de largeur la plus grande (W1) entre ces surfaces de contact (43a) et d'une moitié de la valeur de sinus de l'angle (ϕ) entre ces surfaces de contact (43a) et laquelle dimension de hauteur (H2) des surfaces de contact (43b) des segments transversaux (40 ; 40a, 40b) d'un second type (40b) est plus petite qu'un produit mathématique d'une dimension de largeur la plus grande (W2) entre ces surfaces de contact (43b) et d'une moitié de la valeur de sinus de l'angle (ϕ) entre ces surfaces de contact (43b).

2. Courroie d'entraînement (3) selon la revendication 1, **caractérisée en ce qu'**un rapport entre les dimensions de hauteur (H1, H2) des surfaces de contact (43 ; 43a, 43b) des deux types (40a, 40b) des segments transversaux (40 ; 40a, 40b) a une valeur dans la plage entre 1/3 et 2/3 et de préférence est égale à 1/2.

3. Courroie d'entraînement (3) selon la revendication 1 ou 2, **caractérisée en ce que** les segments transversaux (40 ; 40a, 40b) du premier type (40a) s'étendent plus dans la direction radiale que les segments transversaux (40 ; 40a, 40b) du second type (40a), à la fois plus vers l'intérieur radial et plus vers l'extérieur radial du support (30).

4. Courroie d'entraînement (3) selon l'une des revendications 1, 2 ou 3, **caractérisée en ce qu'**une dimension de largeur (W1) des segments transversaux (40 ; 40a, 40b) du premier type (40a) entre les surfaces de contact (43a) de ceux-ci est très légèrement plus grande qu'une dimension de largeur (W2) des segments transversaux (40 ; 40a, 40b) du second type (40b) entre les surfaces de contact (43b) de ceux-ci.

5. Courroie d'entraînement (3) selon l'une des revendications 1 à 4, **caractérisée en ce que** l'angle aigu (ϕ) entre les surfaces de contact (43 ; 43a, 43b) des segments transversaux (40 ; 40a, 40b) du premier type (40a) est très légèrement plus grand qu'un tel angle (ϕ) entre les surfaces de contact (43b) des segments transversaux (40 ; 40a, 40b) du second type (40b).

6. Courroie d'entraînement (3) selon l'une des revendications 1 à 5, **caractérisée en ce que** lesdits deux types de segment transversal (40a, 40b) sont mutuellement agencés de façon alternée le long de la circonférence du support (30).

7. Courroie d'entraînement (3) selon l'une des revendications 1 à 6, **caractérisée en ce que**, le long de la circonférence du support (30), des paires de segments transversaux consécutifs (40 ; 40a, 40b) du second type (40b) sont agencés de façon alternée avec un seul segment transversal (40 ; 40a, 40b) du premier type (40a).
